# EUROPÄISCHE PATENTSCHRIFT

(11) **EP 1 223 073 B1**
(45) Veröffentlichungstag und Bekanntmachung des Hinweises auf die Patenterteilung: **31.12.2008**
(21) Anmeldenummer: 01128226.6
(22) Anmeldetag: 28.11.2001
(51) Int. Cl.: B60N 2/02

(54) **Getriebe-Antriebseinheit, insbesondere für eine Sitzverstellung oder Servolenkung, mit mindestens einem Abstützelement**
Gear drive unit, particularly for a seat adjustment or a power steering system, with at least a support element
Unité transmission-entraînement pour le réglage d'un siège ou une direction assistée, avec au moins un élément de support

(30) Priorität: 19.12.2000 DE 10063391; 08.08.2001 DE 10139051
(43) Veröffentlichungstag der Anmeldung: 17.07.2002
(73) Patentinhaber: ROBERT BOSCH GMBH, 70442 Stuttgart (DE)
(72) Erfinder: Wiesler, Martin, 76534 Baden-Baden (DE); Winter, Manfred, 77839 Lichtenau (DE); Schmidt, Willi, 76297 Stutensee-Buechig (DE); Peter, Gilles, 67500 Haguenau (FR); Lienig, Andreas, 77815 Buehl (DE)

(56) Entgegenhaltungen:
- EP-A- 0 759 374
- DE-A- 3 726 801
- DE-A- 19 709 852

## Beschreibung

### Stand der Technik

Die Erfindung betrifft eine Getriebe-Antriebseinheit, insbesondere für eine Sitzverstellung oder Servolenkung im Kraftfahrzeug, nach der Gattung des Hauptanspruchs.

Mit der EP 0 759 374 A2 ist eine Vorrichtung zum Verstellen eines Sitzes im Kraftfahrzeug bekanntgeworden, die gegenüber dem Normalbetrieb erheblich größere Kräfte aufnehmen kann, wie sie beispielsweise durch einen Verkehrsunfall verursacht werden. Hierbei ist es wichtig, dass der Fahrzeugsitz fest mit der Karosserie verbunden bleibt, um die Funktion der vorgesehenen Schutzmaßnahmen für die Fahrzeuginsassen (Sicherheitsgurt, Airbag) zu gewährleisten. Dabei ist eine Gewindemutter, die eine Gewindespindel aufnimmt, fest mit der Karosserie verbunden. Die Gewindespindel wird über ein Schneckengetriebe von einem Elektromotor angetrieben, der seinerseits fest mit dem Sitz verbunden ist. Das Getriebegehäuse des Schneckengetriebes ist aus Kunstoff gefertigt und über ein weiteres Gehäuseteil mit dem Antriebsmotor verbunden. Wird der Antriebsmotor betätigt, dreht sich die Gewindespindel und verschiebt das Getriebegehäuse einschließlich Antriebsmotor und Sitz gegenüber der Gewindemutter. Um beispielsweise bei einem Auffahrunfall das Losreißen des Getriebegehäuses von der Gewindespindel zu verhindern, ist ein zusätzliches metallisches, u-förmiges Stützteil vorgesehen, das das Getriebegehäuse über einen Gelenkbolzen mit dem Antriebsmotor und somit mit dem Sitz verbindet Kann das Getriebegehäuse aus Kunststoff dem hohen Kraftfluss nicht standhalten, wird es mittels einer zusätzlichen Gewindemutter durch das metallische Stützteil gehalten.

Nachteil dieser Ausführung ist, dass zusätzlich zum kompletten Getriebegehäuse eine aufwendige Stützkonstruktion notwendig ist, die die Anzahl der Bauteile erhöht und zusätzlichen Bauraum beansprucht.

Mit der DE 37 26 801 A1, die alle Merkmale des Oberbegriffs des Anspruchs 1 und des Anspruchs 5 zeigt, ist eine Kraftübertragungseinrichtung mit einem geteilten Gehäuse bekanntgeworden, in der eine ein Schneckenrad aufweisende Getriebewelle gelagert ist. Zur axialen Lagerung der Getriebewelle ist im Getriebegehäuse eine Scheibe angeordnet, die in eine radiale Nut der Getriebewelle eingreift.

### Vorteile der Erfindung

Die erfindungsgemäße Getriebe-Antriebseinheit mit den Merkmalen der unabhängigen Ansprüche hat den Vorteil, dass sich das Abtriebsrad bei erhöhter Krafteinwirkung entlang der Abtriebswelle beispielsweise bei einem Verkehrsunfall direkt an einem Abstützelement abstützt. Dabei ist es besonders günstig, dass nicht das komplette Getriebegehäuse zusätzlich abgestützt werden muss, sondern lediglich das Abtriebsrad direkt gegenüber einem Abstützelement, was mit weit geringerem Aufwand realisiert werden kann. Durch die erfindungsgemäße Vorrichtung ist somit in einfacher Weise ein Aufprallschutz in die Getriebe-Antriebseinheit integriert, wodurch die Sitze bei einem Verkehrsunfall zuverlässig in ihrer Position im Fahrzeug bleiben. Wird die Abtriebswelle - zumindest teilweise - direkt von dem Abstützelement umgeben, das heißt ohne weitere Bauteile zwischen der Abtriebswelle und dem Abstützelement, nimmt das Abstützelement in unmittelbarer radialer Nähe zur Abtriebswelle Kräfte in Längsrichtung derselben (axial), auf, wodurch Scherkräfte innerhalb des Abtriebsrads minimiert werden, und dadurch eine Zerstörung des Abtriebsrads verhindert ist.

Vorteilhaft wird das Abstützelement zwischen dem Abtriebsrad und der Innenseite des Getriebegehäuses angeordnet, da dann die Kräfte über die Stirnseite des Abtriebsrads radial in unmittelbarer Nähe zur Abtriebswelle auf das Abtriebselement übertragen und an das stabiler ausgeführte Getriebegehäuse, das mit dem Antriebsmotor verbunden ist, weitergeleitet werden. Alternativ kann die Kraft vom Abstützelement auch auf eine Manschette übertragen werden, die fest mit dem gesamten Getriebegehäuse verbunden ist. Dadurch wird eine gleichmäßigere Kraftübertragung vom Getriebegehäuse beispielsweise auf ein bestimmtes Teil des Sitzes erzielt.

Dabei weist das Abstützelement eine Ringnut auf, die in eine entsprechende Gegenausformung des Getriebegehäuses passt.

Günstig ist es, das Abtriebsrad auf ein mit einem Wulst oder einem Gewinde versehenen Teil der Abtriebswelle mittels Spritzgußverfahren anzuformen. Dadurch ist eine gute axiale Fixierung des Abtriebsrads gegenüber der Abtriebswelle gewährleistet. Da die Abtriebswelle aus einer Gewindespindel hergestellt wird, fertigt man den Gewindeabschnitt für das Abtriebsrad in einfacher Weise, indem man das Gewinde in den angrenzenden Bereichen abdreht. Weist das Gewinde der Abtriebswelle an dieser Stelle einen größeren Außendurchmesser auf, als der Innendurchmesser des die Abtriebswelle zumindest teilweise umschließenden Abstützelements, nähern sich die Wirkungslinien der auf die Abtriebswelle wirkenden Zugkraft und der vom Getriebegehäuse auf das Abtriebsrad übertragenen Gegenkraft aneinander an (beziehungsweise liegen beide Kräfte auf einer Wirkungslinie). Dadurch wird die axiale Scherbeanspruchung des Abtriebsrads minimiert beziehungsweise unterbunden, wodurch eine Beschädigung desselben verhindert wird. Dadurch können höhere axiale Kräfte, beispielsweise bei einem Unfall, aufgenommen werden.

Unter normalen Betriebsbedingungen des Verstellvorgangs berührt das Abtriebsrad das Abstützelement nicht, wodurch Reibungsverluste trotz zusätzlichem Aufprallschutz verhindert werden.

In einer alternativen Ausführungsform befindet sich das Abstützelement in vorteilhafter Weise innerhalb des Abtriebsrads. Dazu wird das Abstützelement zuerst zumindest axial auf der Abtriebswelle fixiert und anschließend mit dem Abtriebsrad umspritzt. Dadurch stützt sich das Abtriebsrad direkt am Abstützelement ab, wodurch die mögliche axiale Kraftaufnahme des Abtriebsrads deutlich erhöht wird. Diese Ausführungsform beansprucht zudem keinen zusätzlichen Bauraum.

Besonders günstig ist es, das Abstützelement formschlüssig auf der Abtriebswelle zu befestigen. Dabei ist es vorteilhaft, wenn das Abstützelement als ein Ring oder eine Scheibe mit einem Innengewinde ausgebildet ist, der bzw. die auf ein Außengewinde der Abtriebswelle geschraubt wird. Diese Verbindung ist sehr kostengünstig, da die Abtriebswelle beim Spindelantrieb in der Regel als durchgehende Gewindespindel ausgeformt ist, die in einzelnen Bereichen zur Lagerung abgedreht wird. Aus diesem Grunde weist die Abtriebswelle im Bereich des Abstützelements schon ein Außengewinde auf.

Wird als Abstützrelement eine speed nut verwendet, kann man diese sehr einfach auch auf eine Abtriebswelle mit glatter Oberfläche schieben, wobei sich die Innenkannte der speed nut in Richtung der Kraftwirkung an der Oberfläche der Abtriebswelle festkrallt. Für höhere Festigkeitsanforderungen können mehrere Scheiben hintereinander angeordnet werden, wodurch das aufgespritzte Abtriebsrad günstigerweise in die Abstände zwischen den speed nut - Scheiben greift.

Ist der Außendurchmesser des Abstützelements größer als der Innendurchmesser der Anlaufscheibe, die das Abtriebsrad bei normalem Verstellbetrieb über ein Bund am Abtriebsrad axial führt, so kommen die Wirkungslinien der axial wirkenden Kräfte der Abtriebswelle und des Getriebegehäuses zur Deckung. Dadurch wird eine axiale Scherung des Abtriebsrads verhindert, und selbst bei Zerstörung des Abtriebsrads wird ein Herausreißen der Abtriebswelle aus dem Getriebegehäuse verhindert, da der Abstützring mit der Anlaufscheibe überlappt.

Für die Montage des Abstützelements - insbesondere bei der Anordnung zwischen Abtriebsrad und Gehäuseinnenwand oder als Teil der Gehäusewand - ist es vorteilhaft, wenn das Abstützelement aus mehreren Teilen besteht. Hierbei wird beispielsweise eine erste Halbschale des Abstützelements vor der Spindelmontage eingelegt und eine zweite Halbschale nach derselben eingefügt, so dass die beiden Teile zusammen die Abtriebswelle komplett umschließen. Durch die mehrteilige Ausführung wird auch in diesem Fall eine umlaufende geschlossene Abstützfläche realisiert. Alternativ kann einfach ein Teil des Abstützelements weggelassen werden, wenn es die maximal auftretenden Crash-Kräfte zulassen.

Verfahrentechnisch ist das Abtriebsrad besonders günstig aus Kunstoff herzustellen, wobei eine Ausführung als Schneckenrad mit korrespondierender Schnecke auf der Motorwelle in vorteilhafter Weise eine Selbsthemmung des Getriebes bei günstigem Übersetzungsverhältnis und geringem Gewicht gewährleistet.

Die Sicherheit der Fahrzeuginsassen wird erhöht, weil selbst bei Zerstörung des gegebenenfalls aus Kunstoff bestehenden Abtriebsrads das eine Ende der Abtriebswelle innerhalb des vorzugsweise aus Metall gefertigten Getriebegehäuses gehalten wird. Dadurch ist verhindert, dass sich der Sitz bei einem Unfall von der Karosserie löst.

### Zeichnung

In der Zeichnung sind Ausführungsbeispiele einer erfindungsgemäßen Vorrichtung dargestellt und in der nachfolgenden Beschreibung näher erläutert.

Es zeigen Figur 1 ein Ausführungsbeispiel einer Sitzverstellvorrichtung, Figur 2 den Kräfteverlauf in einem Schneckenrad einer bekannten Getriebe-Antriebseinheit, Figur 3 ein erfindungsgemäßes Ausführungsbeispiel im Schnitt, die Figuren 4 und 5 verschiedene Ausführungen eines Abstützelements im Detail, und die Figuren 6 und 7 zwei weitere Ausführungsbeispiele im Schnitt.

### Beschreibung der Ausführungsbeispiele

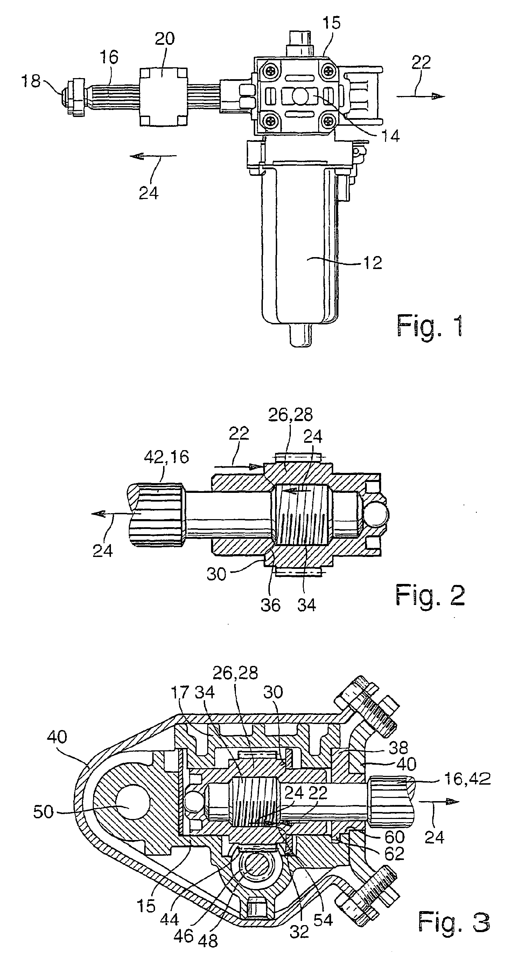

Das in Figur 1 dargestellte Ausführungsbeispiel zeigt eine erfindungsgemäße Getriebe-Antriebseinheit im Überblick, bei der ein Elektromotor 12 über ein Schneckengetriebe 14 eine Spindel 16 antreibt, die aus dem Getriebegehäuse 15 des Schneckengetriebes 14 ragt. Der Elektromotor 12 mit dem sich daran direkt anschließenden Getriebegehäuse 15 sind auf der einen Seite und das rausragende Ende 18 der Spindel 16 auf der anderen Seite beispielsweise eines Fahrzeugsitzes befestigt. Auf der Spindel 16 befindet sich eine Gewindemutter 20, die fest am Karosserieboden fixiert ist. Alternativ ist es auch möglich, die Gewindemutter 20 fest am Sitz zu montieren und die Spindel 16, das Getriebegehäuse 15 und den Elektromotor 12 an der Karosserie zu fixieren, oder sowohl die Gewindemutter 20 als auch den Elektromotor 12 mit dem Getriebegehäuse 15 an eine Sitzkinematik anzubinden, die in den Fahrzeugsitz integriert ist. Bewegt sich das Fahrzeug in Figur 1 beispielsweise nach rechts, und wird das Fahrzeug durch einen Auffahrunfall abrupt gestoppt, wirkt auf das am Sitz befestigte Getriebegehäuse 15 eine Trägheitskraft 22 nach rechts. Die Spindel 16 wird durch die Gewindemutter 20 festgehalten, so dass auf die Spindel 16 als Gegenkraft eine entsprechende Zugkraft 24 wirkt. Der schwächste Punkt bei dem auftretenden Kraftfluss zwischen Fahrzeugsitz und Karosserie ist das Schneckengetriebe 14.

Figur 2 zeigt ein als Schneckenrad 26 ausgeführtes Abtriebsrad 28 einer bekannten Getriebe-Antriebseinheit 10 mit den bei einem Auffahrunfall wirkenden Kräften. Das Schneckenrad 26 ist aus Kunstoff gefertigt und mittels Spritzgußverfahren über ein an der Spindel 16 angeformtes Gewinde 34 aufgespritzt.
Dabei wird das Schneckenrad 26 an einem daran angeformten Bund 30 mittels einer nicht näher dargestellten, im Getriebegehäuse 15 gelagerten Anlaufscheibe 32 axial geführt. Dadurch wird die Trägheitskraft 22 vom Sitz über das Getriebegehäuse 15 auf den Bund 30 des Schneckenrads 26 übertragen. Die entgegengesetzt wirkende Zugkraft 24 greift an der axialen Stirnfläche zwischen dem Gewinde 34 der Spindel 16 und dem Schneckenrad 26 an.

Durch die unterschiedlichen Umfangsbereiche der beiden auf das Schneckenrad 26 wirkenden Kräfte 22 und 24 resultiert eine Scherbeanspruchung des Schneckenrads 26, die dazu führt, dass dieses entlang des Bruchverlaufs 36 bricht. Das hat zur Folge, dass die Spindel 16 aus dem Getriebegehäuse 15 gerissen wird und sich der Sitz bei einem Unfall von der Karosserie löst. Der Erfindung liegt deshalb die Erkenntnis zugrunde, die Scherbeanspruchung des Schneckenrads 26, verursacht durch die unterschiedliche Radien der Angriffspunkte der beiden Kräfte 22 und 24, zu verhindern.

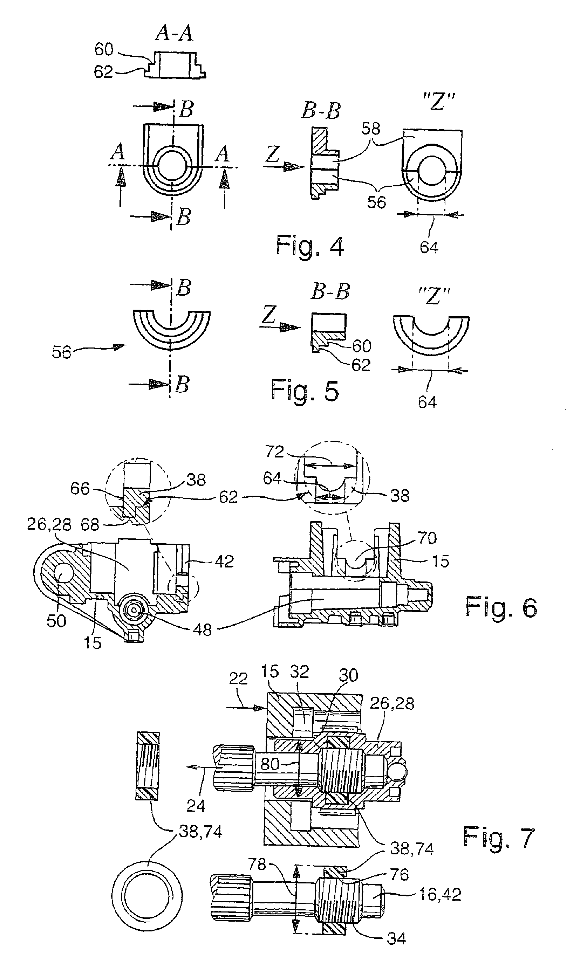

Im Ausführungsbeispiel in Figur 3 ist hierzu ein Abstützelement 38 zwischen dem als Schneckenrad 26 ausgebildeten Abtriebsrad 28 und einer das Getriebegehäuse 15 fest umschließenden Manschette 40 angeordnet. Das Abtriebsrad 28 ist hierbei ebenfalls auf das Gewinde 34 einer als Spindel 16 ausgebildeten Abtriebswelle 42 aufgespritzt. Das Abtriebsrad 28 kämmt über eine Verzahnung 44 mit einer Schnecke 26, die auf einer Ankerwelle 48 des Elektromotors 12 angeordnet ist. Das Abtriebsrad 28 weist einen Bund 30 auf, an dessen Stirnseite das Abtriebsrad 28 mittels einer Anlaufscheibe 32 aus Metall axial geführt wird. Die Anlaufscheibe 32 ist im Getriebegehäuse 15 gelagert, welches von der Manschette 40 umschlossen wird. Das Getriebegehäuse 15 weist einen Deckel 17 und ein Auge 50 auf, das zur Befestigung des Getriebegehäuses 15 am Fahrzeugsitz oder an der Karosserie mittels eines Bolzen dient. Das Abstützelement 38 weist zwei Teile auf, die gemeinsam die Abtriebswelle 42 komplett umschließen (360°), wie auch in Figur 4 dargestellt ist. Über zwei angeformte Ringnuten 60, 62 ist das Abstützelement 38 an das Getriebegehäuse 15 und die Manschette 40 angefügt. Im normalen Verstellbetrieb berührt das Abstützelement 38 das Abtriebsrad 28 nicht, um Reibungsverluste zu vermeiden. Bei einer übermäßigen Krafteinwirkung 24 auf die Abtriebswelle 42 (Crash) greift die Kraft 24 das Abtriebsrad 28 im Bereich der Stirnfläche 54 des Gewindes 34 an. Die Gegenkraft 22 wird vom Getriebegehäuse 15 und der Manschette 40 zum einen direkt auf das Schneckenrad 28, und zum anderen auf das Abstützelement 38 übertragen, welches die Crash-Kraft 24 aufnimmt. Das Abtriebsrad 28 dehnt sich in diesem Fall soweit aus (aus Kunstoff), dass es das Abstützelement 38 berührt. Da das Abstützelement 38 radial bis unmittelbar an den Außendurchmesser der Abtriebswelle 42 reicht, überlagern sich die Wirkungslinien der Kräfte 24 und 22. Dadurch wird das Auftreten von Scherkräften im Abtriebsrad 28 verhindert.

Figur 4 zeigt ein zweiteilig ausgeführtes Abstützelement 38, wie es beispielsweise im Ausführungsbeispiel gemäß Figur 3 Verwendung findet. Das Abstützelement 38 besteht aus einer unteren Halbschale 56 und einer oberen Halbschale 58, die gemeinsam die Abtriebswelle direkt 42 umschließen. Dabei wird zur Montage zuerst die untere Halbschale 56 in das Getriebegehäuse 15 eingefügt, dann die Abtriebswelle 42 eingelegt, danach die obere Halbschale 58 eingesetzt und anschließend das Getriebegehäuse 15 mit einem Deckel 17 versehen und die Manschette 40 montiert. Das Abstützelement 38 weist zwei ringförmige Nuten 60 und 62 auf, mit denen es sich gegen die Manschette 40 und das Getriebegehäuse 15 abstützt. Dadurch wird die Trägheitskraft 22 bei einem Crash vom Sitz über die Manschette 40 und das Gehäuse 15, über das Abstützelement 38 auf das Abtriebsrad 28 übertragen, das sich bei hoher Belastung axial soweit ausdehnt, dass es das Abstützelement 38 berührt. Der Innendurchmesser 64 des Abstützelements 38 ist so bemessen, dass es die Stirnseite 66 des Abtriebsrads 28 maximal überdeckt, ohne die Abtriebswelle 42 zu berühren.

Alternativ kann auch auf die obere Halbschale 58 verzichtet werden, so dass das Abstützelement 38 in Figur 5 lediglich aus einer unteren Halbschale 56 besteht, die die Abtriebswelle 42 nur zur Hälfte umschließt und ebenfalls über die ringförmigen Nuten 60 und 62 in die Manschette 40 und/oder das Getriebegehäuse 15 eingefügt wird.

Figur 6 zeigt ein weiteres Ausführungsbeispiel, bei dem das Abstützelement 38 in die Wand des Getriebegehäuses 15 integriert ist. Dazu weist das Abstützelement 38, das die Abtriebswelle 42 im wesentlichen halbkreisförmig umschließt, eine Nut 62 auf, die in eine Gegenausformung 68 des Getriebegehäuses 15 eingefügt ist. Vor dem Einsetzen des Abstützelements 38 weist das Getriebegehäuse 15 eine Öffnung mit einem Innendurchmesser 72 auf, der durch das Abstützelement 38 auf den Innendurchmesser 64 reduziert wird. Alternativ zur modularen Ausführungsform des Abstützelements 38, kann dieses auch direkt als - vorzugsweise aus Metall gefertigtes - Einlegeteil im Spritzgußverfahren mit dem Getriebegehäuse 15 umspritzt werden. In einer weiteren Variation ist das Getriebegehäuse 15 und der Deckel 17 aus Metall, beispielsweise Aluminium, hergestellt und in einem Guß mit dem Abstützelement 38 gegossen. Bei einer zweiteiligen Ausführungsform des Abstützelements 38 gemäß Figur 4 ist dann die untere Halbschale 56 in das Getriebegehäuse 15, und die obere Halbschale in dessen Deckel 17 integriert.

Ein weiteres Ausführungsbeispiel der Erfindung ist in Figur 7 dargestellt. Das Abstützelement 38 ist hierbei als ringförmige Scheibe 74 mit einem Innengewinde 76 ausgeformt, das vor dem Anspritzen des Abtriebsrads 28 auf das Gewinde 34 der als Spindel 16 ausgeformten Abtriebswelle 42 aufgeschraubt wird. Der Außendurchmesser 78 der ringförmigen Scheibe 74 größer ist dabei größer, als der Innendurchmesser 80 der im Getriebegehäuse 15 gelagerten Anlaufscheibe 32. Somit überlappen sich die Stirnflächen des Abstützelements 38 und der Anlaufscheibe 32, wodurch der Kraftfluss zwischen diesen beiden Flächen über die zwischen diesen liegenden Teile des Abtriebsrads 28 auf einer Wirkungslinie erfolgt. Die bei einem Unfall auf den Sitz wirkende Kraft 22 wird dann über das Getriebegehäuse 15 auf die Anlaufscheibe 32 übertragen und wirkt am Bund 30 auf das Abtriebsrad 28. Das Abtriebsrad 28 stützt sich wiederum am Abstützelement 38 ab, das über Gewindeflanken kraftschlüssig mit der Abtriebswelle 42 verbunden ist, auf die dadurch die Zugkraft 24 als Gegenkraft wirkt. Durch die Überlappung des Außendurchmessers 78 mit dem Innendurchmesser 80 greifen die beiden Kräfte 22 und 24 zumindest näherungsweise auf derselben Wirkungslinie an. Deshalb treten im Abtriebsrad 28 keine Scherkräfte auf, wodurch die Belastung des Abtriebsrads 28 deutlich verringert wird. Selbst bei einer Zerstörung des Abtriebsrads 28 wird das Abstützelement 38 durch die Überlappung desselben mit der Anlaufscheibe 32 im Getriebegehäuse 15 gehalten, wodurch der Fahrzeugsitz auch bei einem Aufprall in seiner ursprünglichen Position verankert bleibt.

Alternativ zur Ausführung als Gewindemutter ist das Abtriebselement in einer weiteren Variation als speed nut ausgebildet. Die Speed nut -Scheibe wird entgegen der crach-Kraftrichtung 24 auf die Abtriebswelle geschoben, so dass sich deren Innenkannte an der glatten Oberfläche der Abtriebswelle festkrallt.

Die Ausführungsbeispiele erläutern die Erfindung zwar anhand einer Sitzverstellvorrichtung, doch ist sie auch für andere Verstellbewegungen, beispielsweise als Lenkhilfe, einsetzbar, bei denen beim Auftreten hoher Kräfte verhindert werden soll, dass sich die Abtriebswelle 28 aus dem Getriebegehäuse 15 löst. So ist als Anwendung auch ein Spindelmotor denkbar, bei dem das Schneckenrad 26, 28 mit einem Innengewinde versehen ist, in dem sich die Spindel 16 axial hindurchbewegt. Auch eine Kombination der einzelnen Merkmale der verschiedenen Ausführungsbeispiele realisiert eine erfindungsgemäße Getriebe-Antriebseinheit.

## Patentansprüche

1. Getriebe-Antriebseinheit (10), insbesondere für eine Sitzverstellung oder Servolenkung, mit einem Getriebegehäuse(15) und einem auf einer aus diesem ragenden Abtriebswelle (42) drehfest angeordneten Abtriebsrad (28), wobei die Abtriebswelle (42) direkt, zumindest teilweise von einem Abstützelement (38) umschlossen ist, gegen das sich das Abtriebsrad (28) bei axialer Krafteinwirkung von außen abstützt, **dadurch gekennzeichnet, dass** das mindestens eine Abstützelement (38) als Teil der Getriebegehäusewand ausgebildet ist

2. Getriebe-Antriebseinheit (10) nach Anspruch 1, **dadurch gekennzeichnet, dass** das Getriebegehäuse (15) von einer Manschette (40) umschlossen ist

3. Getriebe-Antriebseinheit (10) nach einem der Ansprüche 1 bis 2, **dadurch gekennzeichnet, dass** die Abtriebswelle (42) mindestens einen Wulst, insbesondere ein Gewinde (34), aufweist, der vom Abtriebsrad (28) umgriffen ist, und dessen Außendurchmesser größer ist, als der Innendurchmesser (64) des Abstützelements (38).

4. Getriebe-Antriebseinheit (10) nach einem der Ansprüche 1 bis 3, **dadurch gekennzeichnet, dass** das mindestens eine Abstützelement (38) einen Abstand gegenüber dem Abtriebsrad (28) aufweist, der sich mit wachsender axialer Krafteinwirkung verringert.

5. Getriebe-Antriebseinheit (10), insbesondere für eine Sitzverstellung oder Servolenkung, mit einem Getriebegehäuse(15) und einem auf einer aus diesem ragenden Abtriebswelle (42) drehfest angeordneten Abtriebsrad (28), wobei die Abtriebswelle (42) direkt, zumindest teilweise von einem Abstützelement (38) umschlossen ist, gegen das sich das Abtriebsrad (28) bei axialer Krafteinwirkung von außen abstützt, **dadurch gekennzeichnet, dass** das mindestens eine Abstützelement (38) zumindest axial auf der Abtriebswelle (42) fixiert ist, und das als Spritzgußteil ausgeformte Abtriebsrad (28) das Abstützelement umschließt.

6. Getriebe-Antriebseinheit (10) nach Anspruch 5, **dadurch gekennzeichnet, dass** das mindestens eine Abstützelement (38) ein formschlüssig, vorzugsweise mittels eines Gewindes (34, 76), auf der Abtriebswelle (42) angeordneter Ring (74) ist.

7. Getriebe-Antriebseinheit (10)) nach einem der Ansprüche 5 oder 6, **dadurch gekennzeichnet, dass** das mindestens eine Abstützelement (38) eine speed nut ist, deren Innenkannte sich an der Oberfläche der Abtriebswelle (42) abstützt.

8. Getriebe-Antriebseinheit (10) nach einem der Ansprüche 5 bis 7, **dadurch gekennzeichnet, dass** das Abtriebsrad (28) einen Bund (30) zur Führung durch eine im Getriebegehäuse (15) gelagerte Anlaufscheibe (32) aufweist, und der Außendurchmesser (78) des Abstützelements (38) größer ist, als der Innendurchmesser (80) der Anlaufscheibe (32).

9. Getriebe-Antriebseinheit (10) nach einem der vorgehenden Ansprüche, **dadurch gekennzeichnet, dass** das Abstützelement (38) mehrteilig, insbesondere zweiteilig, (56, 58) ist.

10. Getriebe-Antriebseinheit nach einem der vorgehenden Ansprüche, **dadurch gekennzeichnet, dass** das Abtriebsrad (28) ein aus Kunststoff gebildetes Schneckenrad (26) ist.

## Claims

1. Gear drive unit (10), particularly for a seat adjustment or a power steering system, with a gear housing (15) and an output gear (28) which is arranged in a rotationally fixed manner on an output shaft (42) which protrudes out of said gear housing, wherein the output shaft (42) is directly and at least partially enclosed by a support element (38) against which the output gear (28) is supported in the event of an axial application of force from the outside, **characterized in that** the at least one support element (38) is designed as part of the gear housing wall.

2. Gear drive unit (10) according to Claim 1, **characterized in that** the gear housing (15) is enclosed by a protective cover (40).

3. Gear drive unit (10) according to either of Claims 1 and 2, **characterized in that** the output shaft (42) has at least one bead, in particular a thread (34), around which the output gear (28) engages and the outside diameter of which is greater than the inside diameter (64) of the support element (38).

4. Gear drive unit (10) according to one of Claims 1 to 3, **characterized in that** the at least one support element (38) is at a distance from the output gear (28), which distance is reduced as the axial application of force increases.

5. Gear drive unit (10), particularly for a seat adjustment or a power steering system, with a gear housing (15) and an output gear (28) which is arranged in a rotationally fixed manner on an output shaft (42) which protrudes out of said gear housing, wherein the output shaft (42) is directly and at least partially enclosed by a support element (38) against which the output gear (28) is supported in the event of an axial application of force from the outside, **characterized in that** the at least one support element (38) is fixed at least axially on the output shaft (42), and the output gear (28), which is formed as an injection-moulded part, encloses the support element.

6. Gear drive unit (10) according to Claim 5, **characterized in that** the at least one support element (38) is a ring (74) which is arranged on the output shaft (42) in an interlocking manner, preferably by means of a thread (34, 76).

7. Gear drive unit (10) according to either of Claims 5 and 6, **characterized in that** the at least one support element (38) is a speed nut, the inner edge of which is supported on the surface of the output shaft (42).

8. Gear drive unit (10) according to one of Claims 5 to 7, **characterized in that** the output gear (28) has a collar (30) for guidance by means of a thrust washer (32) mounted in the gear housing (15), and the outside diameter (78) of the support element (38) is greater than the inside diameter (80) of the thrust washer (32).

9. Gear drive unit (10) according to one of the preceding claims, **characterized in that** the support element (38) is in a number of parts, in particular two parts (56, 58).

10. Gear drive unit according to one of the preceding claims, **characterized in that** the output gear (28) is a worm gear (26) formed from plastic.

## Revendications

1. Unité d'entraînement de transmission (10), en particulier pour un réglage de siège ou une direction assistée, comprenant un boîtier de transmission (15) et une roue de sortie (28) disposée de manière solidaire en rotation sur un arbre de sortie (42) sortant du boîtier de transmission, l'arbre de sortie (42) étant entouré directement au moins en partie par un élément de support (38), contre lequel la roue d'entraînement (28) s'appuie depuis l'extérieur en cas d'application de force axiale, **caractérisée en ce que** l'au moins un élément de support (38) est réalisé en tant que partie de la paroi du boîtier de transmission.

2. Unité d'entraînement de transmission (10) selon la revendication 1, **caractérisée en ce que** le boîtier de transmission (15) est entouré par une manchette (40).

3. Unité d'entraînement de transmission (10) selon l'une quelconque des revendications 1 ou 2, **caractérisée en ce que** l'arbre de sortie (42) présente au moins un bourrelet, en particulier un filetage (34), avec lequel s'engage la roue de sortie (28) et dont le diamètre extérieur est supérieur au diamètre intérieur (64) de l'élément de support (38).

4. Unité d'entraînement de transmission (10) selon l'une quelconque des revendications 1 à 3, **caractérisée en ce que** l'au moins un élément de support (38) présente un écartement par rapport à la roue de sortie (28) qui rétrécit avec l'augmentation de l'application de force axiale.

5. Unité d'entraînement de transmission (10), en particulier pour un réglage de siège ou une direction assistée, comprenant un boîtier de transmission (15) et une roue de sortie (28) disposée de manière solidaire en rotation sur un arbre de sortie (42) sortant du boîtier de transmission, l'arbre de sortie (42) étant entouré directement au moins en partie par un élément de support (38), contre lequel la roue d'entraînement (28) s'appuie depuis l'extérieur en cas d'application de force axiale, **caractérisée en ce que** l'au moins un élément de support (38) est fixé au moins axialement sur l'arbre de sortie (42) et la roue de sortie (28) formée en tant que pièce moulée par injection entoure l'élément de support.

6. Unité d'entraînement de transmission (10) selon la revendication 5, **caractérisée en ce que** l'au moins un élément de support (38) est une bague (74) disposée par engagement par coopération de forme, de préférence au moins d'un filetage (34, 76), sur l'arbre de sortie (42).

7. Unité d'entraînement de transmission (10) selon l'une quelconque des revendications 5 ou 6, **caractérisée en ce que** l'au moins un élément de support (38) est un écrou rapide, dont l'arête interne s'appuie sur la surface de l'arbre de sortie (42).

8. Unité d'entraînement de transmission (10) selon l'une quelconque des revendications 5 à 7, **caractérisée en ce que** la roue de sortie (28) présente un épaulement (30) pour le guidage à travers un disque de butée (32) monté dans le boîtier de transmission (15), et le diamètre extérieur (78) de l'élément de support (38) est plus grand que le diamètre intérieur (80) du disque de butée (32).

9. Unité d'entraînement de transmission (10) selon l'une quelconque des revendications précédentes, **caractérisée en ce que** l'élément de support (38) est réalisé en plusieurs parties, en particulier en deux parties (56, 58).

10. Unité d'entraînement de transmission (10) selon l'une quelconque des revendications précédentes, **caractérisée en ce que** la roue de sortie (28) est une roue à denture hélicoïdale (26) en plastique.
